# EUROPÄISCHE PATENTSCHRIFT

(11) **EP 0 653 082 B1**
(45) Veröffentlichungstag und Bekanntmachung des Hinweises auf die Patenterteilung: **01.10.1997**
(21) Anmeldenummer: 93917610.3
(22) Anmeldetag: 21.07.1993
(51) Int. Cl.: G06K 19/067, G11B 23/40

(54) **Kassette oder Diskette mit Kontakten in Barcodeform**
Cassette or diskette with contacts in barcode shape
Cassette ou diskette avec des contacts ayant la forme de code barres

(30) Priorität: 23.07.1992 DE 4224371; 11.08.1992 DE 4226408; 05.05.1993 DE 4314901
(43) Veröffentlichungstag der Anmeldung: 17.05.1995
(73) Patentinhaber: DEUTSCHE THOMSON-BRANDT GMBH, 78048 Villingen-Schwenningen (DE)
(72) Erfinder: SPILLE, Jens, D-30880 Laatzen (DE); SCHRÖDER, Ernst, F., D-30655 Hannover (DE); PLATTE, Hans-Joachim, D-30966 Hemmimgen (DE); GÖKEN, Klaus, D-27721 Ritterhude (DE)
(74) Vertreter: Hartnack, Wolfgang, Dipl.-Ing.
(86) Internationale Anmeldenummer: EP9301935
(87) Internationale Veröffentlichungsnummer: WO9402912

(56) Entgegenhaltungen:
- EP-A- 0 125 848
- EP-A- 0 265 167
- EP-A- 0 373 718
- EP-A- 0 422 481
- DE-A- 2 943 409
- GB-A- 2 208 029
- US-A- 4 044 229

## Beschreibung

Die Erfindung betrifft eine Aufzeichnungs-Kassette oder Diskette mit am Gehäuse angebrachten Mitteln für eine elektrische Kontaktierung.

### Stand der Technik

Strich- oder Barcode-Einheiten bestehen aus mehreren CodeElementen - sogenannten Bars, deren Informationsinhalt mit Hilfe einer optischen Abtastung gelesen und ausgewertet werden kann. Es ist bekannt, einen elektrischen oder elektromagnetischen oder optischen Kontakt oder ein derartiges Kontaktfeld rein funktionell so auszubilden, daß eine geeignete Schnittstelle für ein Kontaktierungsmittel mit diesem Kontakt oder Kontaktfeld gebildet wird.

EP-A-0 373 718 und DE-A-2 943 409 offenbaren eine Aufzeichnungs-Kassette mit am Gehäuse angebrachten elektrisch leitfähigen Kontaktelementen, die auf der Oberfläche des Gehäuses flächenförmig angeordnet und mit einer in der Aufzeichnungs-Kassette befindlichen integrierten Schaltung verbunden sind, die Informationen über die Aufzeichnungs-Kassette enthält.

EP-A-0 265 167 beschreibt ein Disketten-Magazin mit ebensolchen Kontaktelementen, die intern so verbunden werden können, daß die Art dieser Verbindungen Informationen über den Aufzeichnungsinhalt der Disketten enthalten.

GB-A-2 208 029 beschreibt Diskettengehäuse auf denen Kontaktbereiche angeordnet sind, die auf der Gehäuseoberfläche ebenfalls vorhandene, sichtbare Schriftzeichen umfassen. EP-A-0 422 481 beschreibt einen kapazitiv auslesbaren Strichkode.

### Erfindung

Der Erfindung liegt die Aufgabe zugrunde, die Effektivität der Kontaktierung einer Aufzeichnungs-Kassette mit einer darin enthaltenen, von außen elektrisch kontaktierbaren Schaltung zu verbessern. Diese Aufgabe wird durch die in den Ansprüchen 1 und 2 angegebene Aufzeichnungs-Kassette gelöst, wobei Anspruch 1 von EP-A-0 373 718 und Anspruch 2 von EP-A-0 265 167 ausgehen. Strich- oder Barcodes sind allgemein bekannt und ihre Codierungsvorschrift ist international genormt. Bei diesem Code werden Informationen durch einzelne Code-Elemente - die sogenannten Bars - repräsentiert. Als Strich- oder Barcode-Einheiten sind Aufkleber oder Labels, die den Strich- oder Barcode tragen, bekannt, wobei diese Aufkleber oder Labels regelmäßig auf verschiedene Produkte aller Art zu völlig unterschiedlichen Informations- und Speicherzwecken aufgebracht werden. Der Strichoder Barcode kann mittels eines Strich- oder Barcode-Lesegerätes optisch abgetastet und zur weiteren Verarbeitung einer Auswerteeinheit zugeführt werden.

Gemäß der Erfindung sind einzelne Bars oder Zwischenräume zwischen den Bars elektrisch leitend ausgeführt. Dieses ermöglicht neben der optischen Abtastung des Barcodes auch die elektrische kontaktbehaftete Abtastung des Barcodes.

Die normalerweise in einer separaten Strich- oder Barcode-Einheit enthaltenen Informationen und/oder zusätzlich andere Informationen können äußerst platzsparend in den Anschlüssen bzw. in dem Speicher der integrierten Schaltung untergebracht werden. Durch eine derartige Anordnung kann eine separate Strich- oder Barcode-Einheit eingespart werden oder es kann der Informationsvorrat der Strich- oder Barcode-Einheit erheblich vergrößert werden. Als Speicher bietet sich insbesondere ein EEPROM (Electrical Erasable Programmable Read Only Memory) an.

Einzelne benachbarte Bars können miteinander elektrisch verbunden werden, so daß sie eine Gruppe bilden. Dieses kann beispielsweise durch eine elektrisch leitende Kontaktschicht an den oder unterhalb der Bars hergestellt werden. Somit wird der Zugriff auf die Kontakte erleichtert.

Die Erfindung läßt sich in hervorragender Weise bei Aufzeichnungsträgern wie z.B. Videokassetten anwenden. Es ist bekannt, eine Barcode-Einheit auf einer Videokassette aufzubringen, wobei der Barcode Informationen über den Aufzeichnungsträger, über dessen Inhalt oder Steuerungsinformationen für einen Videorecorder enthält. Mittels eines Barcodelesers im Videokassettenrecorder werden die codierten Informationen des Barcodes abgetastet, einer Auswerteeinheit zugeführt und ausgewertet, sowie am Videorecorder selbst oder mittels eines On-Screen Displays (OSD)-Schaltung auf einem Fernsehgerät dargestellt.

Mittels der Erfindung können jetzt nicht nur die Informationen auf dem Barcode, sondern auch oder alternativ dazu die Informationen aus der mit den Bars verbundenen elektrischen Schaltung bzw. Speicherschaltung auf einfache Weise ausgelesen werden, ohne den Speicher oder die Schaltung an einer anderen Stelle als der der Strich- oder Barcode-Einheit unterzubringen.

Mittels der Erfindung wird eine elegante und platzsparende Ausbildung des Beschriftungsfeldes erreicht, indem ohnehin notwendige Beschriftungen gleichzeitig als Kontakte dienen.

### Zeichnungen

Anhand der Zeichnungen sind Ausführungs-Beispiele der Erfindung beschrieben. Diese zeigen in:
- Fig. 1: eine erfindungsgemäße Strich- oder Barcode-Einheit;
- Fig. 2: einen Videorecorder;

### Ausführungs-Beispiele

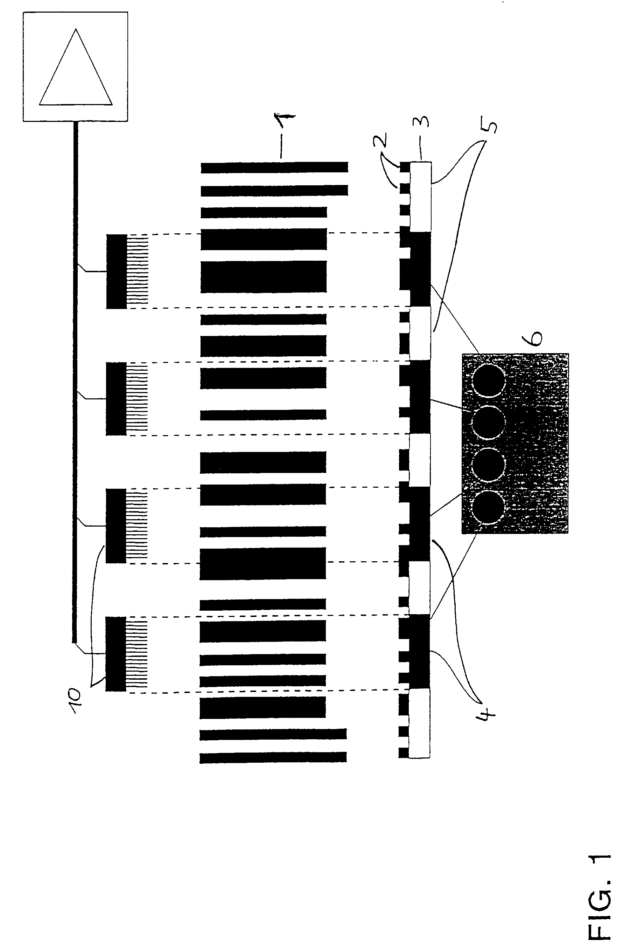

Fig. 1 zeigt in der Mitte eine bekannte Strich- oder Barcode-Einheit 1, welche sich aus mehreren Codeelementen - den sogenannten Bars 2 aufbaut.

Weiterhin zeigt Fig. 1 in der unteren Hälfte einen durch die Blattebene verlaufenden Schnitt durch die Barcodeeinheit 1, deren Bars 2 aus Graphit oder Metall elektrisch leitend ausgeführt und auf einem Träger 3 angeordnet sind. Der Träger 3 weist elektrisch leitende Kontaktzonen 4 auf, die durch Isolationszonen 5 voneinander getrennt sind.

Durch die Kontaktzonen 4 werden jeweils bestimmte benachbart liegende Bars 2 elektrisch miteinander verbunden und bilden innerhalb jeder Kontaktzone eine Gruppe. Die eine Gruppe bildenden Bars sind jeweils mit dem Kontakt eines (oder mehrerer) Chips 6 verbunden, der ein EEPROM-Speicher sein kann. Durch Kontaktbürsten 10 können die Signale von Chip 6 ausgelesen werden. Die gesamte Dicke der Barcode-Einheit mit dem Träger und dem Chip kann weniger als lmm, beispielsweise 0,5mm, betragen.

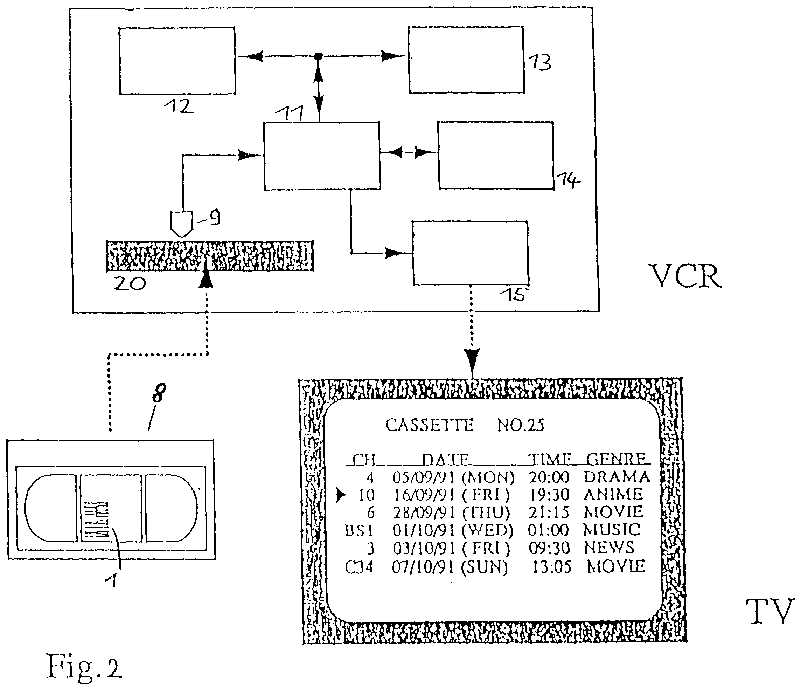

In Fig. 2 ist die Strich- oder Barcode-Einheit 1 auf einer Videokassette 8 angeordnet. Der Videorecorder VCR weist einen Barcode-Leser 9 und die Kontaktbürsten 10 auf (in Fig. 2 nicht dargestellt). Von der in einen Kassettenschacht 20 eingeführten Kassette werden die mit dem Barcode-Leser 9 abgetasteten Signale des Barcodes wie auch die durch die Kontaktbürsten 10 vom Chip 6 ausgelesenen gespeicherten Informationen im Videorecorder einem Mikrocomputer 11 zugeführt, der mit einem Timer-Mikrocomputer 12, einem System-Kontroll-Mikrocomputer 13 und einem SRAM-Speicher 14 über Busleitungen in Verbindung steht. Ein Ausgang des Mikrocomputers 11 ist mit einer On-Screen-Display-Schaltung (OSD) 15 verbunden, die die Informationen des Barcodes und/oder die im Speicherchip gespeicherten Informationen für eine Bildschirmdarstellung in einem Fernsehgerät TV aufarbeitet.
Beim Einzug der Videokassette 8 in den Kassettenschacht 20 wird die Barcode-Einheit 1 am Barcodeleser 9 im Videorecorder VCR vorbeigeführt und gelesen. Nach Fixierung der Videokassette im Videorecorder können die in Fig. 1 dargestellten Kontaktbürsten 10 auf die Bars bzw. Kontaktzonen aufgebracht werden, so daß eine Verbindung zum Chip 6 hergestellt und ein Auslesen der im Speicherchip gespeicherten Informationen möglich ist. Es ist natürlich von Vorteil, wenn der Barcodeleser 9 und die Kontaktbürsten 10 eine bauliche Einheit bilden.
Weist der Videorecorder nur den Barcode-Leser 9 oder nur die Kontaktbürsten 10 auf, so ist in jedem Fall ein Auslesen der kassettentypischen Informationen oder des Inhaltverzeichnisses der Kassette über den Leser 9 oder die Bürsten 10 möglich.

Über einen Videorecorder mit Kontaktierungsmitteln kann eine Verbindung zu der elektrischen Speicherschaltung 6 hergestellt werden. Aus dem Vorliegen der elektrischen Kontakte selbst kann aber in Verbindung mit einer im Videorecorder vorgesehenen Auswerteinheit bereits eine bestimmte Information über den Kassettentypus oder einen Aufzeichnungsbeitrag ermittelt werden.

## Patentansprüche

1. Aufzeichnungs-Kassette (8) oder Diskette mit am Gehäuse angebrachten Mitteln für eine elektrische Kontaktierung, welche mehrere elektrisch leitfähige Kontaktelemente (2) enthalten, von denen zumindest einige voneinander elektrisch isoliert sind und die auf der Oberfläche des Gehäuses flächenförmig angeordnet sind und mit einer integrierten Schaltung (56) verbunden sind, in der Informationen über die Aufzeichnungs-Kassette oder Diskette enthalten sind und/oder speicherbar sind, **dadurch gekennzeichnet,** daß die Kontaktelemente galvanisch kontaktierbar als Teile (2) einer Barcode-Einheit (1) ausgebildet sind.

2. Aufzeichnungs-Kassette (8) oder Diskette mit am Gehäuse angebrachten Mitteln für eine elektrische Kontaktierung, welche mehrere elektrisch leitfähige Kontaktelemente (2) enthalten, von denen zumindest einige voneinander elektrisch isoliert sind und die auf der Oberfläche des Gehäuses flächenförmig angeordnet sind und so miteinander verbunden sind, daß diese Verbindungen Informationen über die Aufzeichnungs-Kassette oder Diskette beinhalten, **dadurch gekennzeichnet,** daß die Kontaktelemente galvanisch kontaktierbar als Teile (2) einer Barcode-Einheit (1) ausgebildet sind.

3. Aufzeichnungs-Kassette oder Diskette nach Anspruch 1, wobei die integrierte Schaltung (6, 56) ein EEPROM ist.

## Claims

1. Recordable cassette (8) or diskette including means mounted on the housing for establishing an electrical contact, the means comprising a plurality of electrically conductive contact elements (2) at least some of which are mutually electrically insulated and said elements are arranged in planar manner on the surface of the housing and are connected to an integrated circuit (56) in which items of information regarding the recordable cassette or diskette are contained and/or are storable, characterised in that, the contact elements are formed in galvanically contactable manner as part (2) of a bar code unit (1).

2. Recordable cassette (8) or diskette including means mounted on the housing for establishing an electrical contact, the means comprising a plurality of electrically conductive contact elements (2) at least some of which are mutually electrically insulated and said elements are arranged in planar manner on the surface of the housing and are connected to one another in such a manner that these connections provide items of information regarding the recordable cassette or diskette, characterised in that, the contact elements are formed in galvanically contactable manner as part (2) of a bar code unit (1).

3. Recordable cassette or diskette in accordance with Claim 1, wherein the integrated circuit (6, 56) is an EEPROM.

## Revendications

1. Cassette ou disquette d'enregistrement (8) présentant des moyens apposés sur le boîtier pour l'établissement d'un contact électrique, qui comprennent plusieurs éléments de contact électriquement conducteurs (2). Certains sont isolés électriquement les uns des autres. Ils sont disposés de façon planiforme sur la surface du boîtier et reliés à un circuit intégré (56) dans lequel des informations sur la cassette ou la disquette d'enregistrement sont contenues et / ou stockables, **caractérisée en ce que** les éléments de contact pouvant être mis en contact électriquement sont configurés en tant que parties (2) d'une unité de code-barre (1).

2. Cassette ou disquette d'enregistrement (8) présentant des moyens apposés sur le boîtier pour l'établissement d'un contact électrique, qui comprennent plusieurs éléments de contact électriquement conducteurs (2). Certains sont isolés électriquement les uns des autres. Ils sont disposés de façon planiforme sur la surface du boîtier et sont reliés entre eux de sorte que ces connexions contiennent des informations sur la cassette ou la disquette d'enregistrement, **caractérisée en ce que** les éléments de contact pouvant être mis en contact électriquement sont configurés en tant que parties (2) d'une unité de code-barre (1).

3. Cassette ou disquette d'enregistrement d'après la revendication 1, où le circuit intégré (6, 56) est une EEPROM.
